# EUROPÄISCHE PATENTSCHRIFT

(11) **EP 0 423 885 B1**
(45) Veröffentlichungstag und Bekanntmachung des Hinweises auf die Patenterteilung: **13.04.1994**
(21) Anmeldenummer: 90202716.8
(22) Anmeldetag: 12.10.1990
(51) Int. Cl.: H02H 9/00

(54) **Stromversorgungseinrichtung mit Einschaltstrombegrenzungsschaltung**
Current supply with inrush current limitation
Dispositif d'alimentation avec limitation du courant d'appel

(30) Priorität: 17.10.1989 DE 3934577
(43) Veröffentlichungstag der Anmeldung: 24.04.1991
(73) Patentinhaber: Philips Patentverwaltung GmbH, 22335 Hamburg (DE); Philips Electronics N.V., 5621 BA Eindhoven (NL)
(72) Erfinder: Lösel, Walter, Dipl.-Ing., W-8510 Fürth (DE)
(74) Vertreter: Peuckert, Hermann, Dipl.-Ing.

(56) Entgegenhaltungen:
- DE-A- 3 535 864
- US-A- 3 935 511
- US-A- 4 328 459
- US-A- 4 621 313
- EDN ELECTRICAL DESIGN NEWS. vol. 25, no. 10, 20 Mai 1980, DENVER Seiten 145 - 148; ADAIR R.: "Soft starting a dc power supply improves reliability, efficiency"
- ELECTRONIC DESIGN. vol. 31, no. 8, 14 April 1983, DENVILLE, NJ Seite 166 "Power FET soft-starts filter capacitor"

## Beschreibung

Die Erfindung betrifft eine Stromversorgungseinrichtung mit einer zwischen einer eingangsseitigen Versorgungsspannung und einem ausgangsseitigen Speicherkondensator liegenden Einschaltstrombegrenzungsschaltung mit einem ersten Halbleiterschalter, dessen Schaltstrecke parallel zu einem Widerstand und in Reihe mit dem Speicherkondensator liegt, dessen dem Widerstand abgewandter Anschluß mit einem Pol der Versorgungsspannung gekoppelt ist, wobei parallel zu dessen Steuerstrecke ein erster Kondensator sowie die Schaltstrecke eines zweiten Halbleiterschalters angeordnet sind, dessen Steuerelektrode an den Abgriff eines ersten Spannungsteilers angeschlossen ist, wobei parallel zur Steuerstrecke des zweiten Halbleiterschalters die Schaltstrecke eines dritten Halbleiterschalters liegt, der in Abhängigkeit eines von einer Schwellwertschaltung gelieferten Steuerstroms beim Unterschreiten eines Schwellwertes der Versorgungsspannung gesperrt wird.

Bei Stromversorgungseinrichtungen für Nachrichtenübertragungssysteme wird eine beispielsweise aus einer Amtsbatterie oder aus der Netzspannung durch Gleichrichtung gewonnene Gleichspannung (Versorgungsspannung) mit Hilfe eines Gleichspannungswandlers in eine stabilisierte Ausgangsspannung umgewandelt. Zur Überbrückung von kurzzeitigen Spannungseinbrüchen der Versorgungsspannung ist dem Gleichspannungswandler ein Speicherkondensator vorgeschaltet. Dies hat zur Folge, daß beim Einschalten der Stromversorgungseinrichtung ein hoher Einschaltstrom in den Speicherkondensator fließt, der mit einem Einbruch der Versorgungsspannung verbunden ist. Darüber hinaus kann es durch den hohen Einschaltstrom zu einem unbeabsichtigten Auslösen von Sicherungsautomaten während des Einschaltvorgangs kommen.

Aus DE-A 35 35 864 ist eine Strombegrenzungsschaltung bekannt, die einen über die Strombegrenzungsschaltung angeschlossenen Lastkreis mit einem Speicherkondensator bei kurzzeitigen Überspannungen und Überströmen schützen soll. Dabei wird ein Feldeffekttransistor verwendet, dessen Schaltstrecke von einem Parallelwiderstand überbrückt ist und zu der ein Strommeßwiderstand in Serie geschaltet ist. Am Strommeßwiderstand ist zur Steuerung des Feldeffekttransistors eine Stromauswerteschaltung angeschlossen. Der Parallelwiderstand ist so mit der Stromauswerteschaltung verbunden, daß sein Stromanteil mitausgewertet wird. Bei gesperrtem Feldeffekttransistor fließt der gesamte Laststrom über den Parallelwiderstand. Die Stromauswerteschaltung besteht aus einem Bipolartransistor, dessen Emitter an den Strommeßwiderstand und dessen Basis über einen Widerstand an die Source-Elektrode des Feldeffekttransistors angeschlossen ist. Überschreitet der Spannungsabfall am Strommeßwiderstand einen vorgegebenen Maximalwert, so wird der Transistor leitend. Damit wird die Steuerspannung (Gate-Source) des Feldeffekttransistors zu Null und der Feldeffekttransistor vollständig gesperrt. Der gesamte Strom fließt dann über den Parallelwiderstand. Unterhalb des Maximalwertes des Spannungsabfalls am Strommeßwiderstand übernimmt der Feldeffekttransistor einen entsprechenden Stromanteil, während der verbleibende Stromanteil über den Parallelwiderstand fließt. Für ein verzögertes Zuschalten des Feldeffekttransistors ist bei einer weiteren Schaltungsvariante ein Verzögerungsglied, bestehend aus der Parallelschaltung eines Kondensators und eines Widerstands, vorgesehen. Um eine kurze Wiederbereitschaftszeit der Strombegrenzungsschaltung zu erreichen, muß nach einem Ausfall der Versorgungsspannung auf eine schnelle Entladung des Speicherkondensators geachtet werden. Zu diesem Zweck ist dem Speicherkondensator ein PTC-Widerstand parallelgeschaltet. Durch den Strommeßwiderstand fließt der gesamte Laststrom, wodurch erhebliche Verluste hervorgerufen werden können.

Aus US-A-3935511 ist eine Stromversorungseinrichtung der eingangs genannten Art bekannt. Dabei liegt zwischen einer eingangsseitigen Versorgungsspannung und einem eingangsseitigen Speicherkondensator eine Einschaltstrombegrenzungsschaltung. Die Einschaltstrombegrenzungsschaltung weist einen als Tyristor ausgebildeten ersten Halbleiterschalter auf, parallel zu dessen Schaltstrecke ein als PTC-Widerstand ausgebildeter Parallelwiderstand angeordnet ist. Parallel zur Steuerstrecke des Tyristors liegt ein erster Kondensator sowie die Schaltstrecke eines als Bipolartransistor ausgebildeten zweiten Halbleiterschalters. Die Steuerelektrode des zweiten Halbleiterschalters ist über einen Widerstand an den Abgriff eines Spannungsteilers angeschlossen, der aus Widerständen sowie einer Zenerdiode gebildet wird.

Der Erfindung liegt die Aufgabe zugrunde, eine Stromversorgungseinrichtung der eingangs genannten Art zu verbessern. Dabei soll die Einschaltstrombegrenzungsschaltung eine geringe Verlustleistung aufweisen und auch bei häufig und schnell auftretenden Aussetzern der Versorgungsspannung verzögerungsfrei wieder wirksam werden.

Diese Aufgabe wird bei einer Stromversorgungseinrichtung der eingangs genannten Art dadurch gelöst, daß die Halbleiterschalter als selbstsperrende Feldeffekttransistoren ausgebildet sind und parallel zur Steuerstrecke des ersten Halbleiterschalters ein erster Widerstand angeordnet ist, der zusammen mit dem ersten Kondensator eine Parallelschaltung zum verzögerten Einschalten des ersten Halbleiterschalters bildet, wobei parallel zum ersten Spannungsteiler ein zweiter Kondensator liegt, der beim Unterschreiten eines Schwellwertes der Versorgungsspannung, nachdem der dritte Halbleiterschalter gesperrt ist, zur Entladung über die Widerstände des ersten Spannungsteilers und damit zum Steuern des zweiten Halbleiterschalters in den leitenden Zustand vorgesehen ist.

Vorteilhafte Ausgestaltungsformen sind in den Unteransprüchen enthalten.

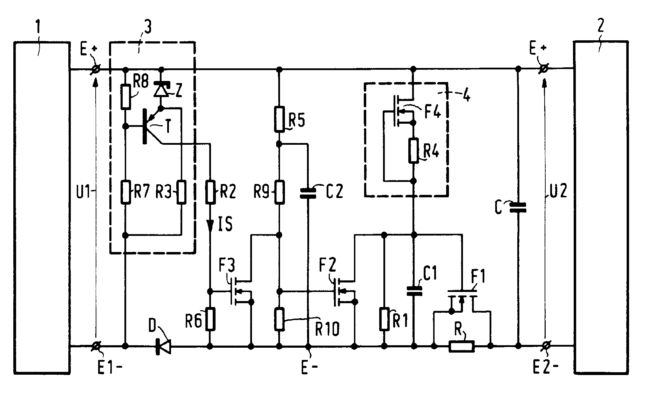

Im folgenden wird die Erfindung anhand des in der Figur dargestellten Ausführungsbeispiels näher erläutert.

Die Figur zeigt eine Stromversorgungseinrichtung mit Einschaltstrombegrenzungsschaltung.

Bei dem in der Figur dargestellten Ausführungsbeispiel liegt die Schaltungsanordnung zur Begrenzung des Einschaltstroms zwischen einer Spannungsversorgung 1, die eine, beispielsweise aus einer Amtsbatterie oder einem Netzgleichrichter, erzeugte Gleichspannung (Versorgungsspannung U1) liefert, und einem Gleichspannungswandler 2, an dem eingangsseitig an einem Speicherkondensator C eine Betriebsspannung U2 anliegt. Die Einschaltstrombegrenzungsschaltung weist einen ersten elektronischen Halbleiterschalter F1 auf, der als n-Kanal-MOS-Feldeffekttransistor ausgebildet ist und parallel zu dessen Schaltstrecke (Drain-Source) ein Parallelwiderstand R angeordnet ist. Die Drain-Elektrode des ersten Feldeffekttransistors F1 ist mit dem negativen Pol E2- der Betriebsspannung U2 verbunden. Die Source-Elektrode liegt auf einem Potential E- und ist über eine Diode D mit dem negativen Pol E1- der Versorgungspannung U1 verbunden. Die Diode D verhindert ein Entladen des Speicherkondensators C bei Spannungseinbrüchen der Versorgungsspannung U1 und ist vorteilhafter Weise als Schottky-Diode ausgebildet, die eine Durchlaßspannung von ca. 0,3 Volt und somit geringe Verluste aufweist. Parallel zur Steuerstrecke (Gate-Source) des ersten Feldeffekttransistors F1 liegt ein Verzögerungsglied, das aus der Parallelschaltung eines ersten Kondensators C1 und eines ersten Widerstands R1 gebildet wird. Das Verzögerungsglied R1, C1 ist parallel zur Schaltstrecke eines zweiten Halbleiterschalters F2 angeordnet. Der Kondensator C1 wird durch eine an ein Bezugspotential E+ angeschlossene Konstantstromquelle 4 geladen, die bei dem in der Figur dargestellten Ausführungsbeispiel aus einem vierten Feldeffekttransistor F4 und einem vierten Widerstand R4 gebildet wird. Dazu ist die Drain-Elektrode des vierten Feldeffekttransistors F4 mit dem Bezugspotential E+ und die Gate-Elektrode mit dem Verzögerungsglied R1, C1 und über den vierten Widerstand R4 mit der Source-Elektrode des vierten Feldeffekttransistors F4 verbunden. Die Steuerelektrode des zweiten Feldeffekttransistors F2 ist an den Abgriff eines aus zwei Widerständen R9, R10 gebildeten ersten Spannungsteilers mit einem parallel dazu liegenden zweiten Kondensator C2 angeschlossen. Der zweite Kondensator C2 ist außerdem über einen fünften Widerstand R5 mit dem Bezugspotential E+ verbunden. Bei einer in der Figur nicht dargestellten Ausgestaltungsform ist der fünfte Widerstand R5 mit dem Bezugspotential E+ über eine weitere Diode verbunden, die bei einem Spannungseinbruch der Betriebsspannung U2 ein Entladen des Kondensators C2 über den Widerstand R9 verhindert. Parallel zur Steuerstrecke des zweiten Halbleiterschalters F2 liegt die Schaltstrecke (Drain-Source) eines dritten Feldeffekttransistors F3, dessen Gate-Elektrode einerseits über einen sechsten Widerstand R6 mit dem Potential E- und andererseits über einen zweiten Widerstand R2 mit dem Kollektor eines PNP-Transistors T verbunden ist. Der Emitter des Transistors T ist über eine Zenerdiode Z an das Bezugspotential E+ und über einen dritten Widerstand R3 mit dem negativen Pol E1- der Versorgungsspannung U1 verbunden. Die Basis des Transistors T ist an den Mittenabgriff eines eingangsseitig angeordneten, aus zwei Widerständen R7, R8 gebildeten, zweiten Spannungsteiler angeschlossen. Aus dem Transistor T, dem zweiten Spannungsteiler R7, R8 sowie dem dritten Widerstand R3 und der Zenerdiode Z wird somit eine Schwellwertschaltung 3 gebildet, die beim Unterschreiten der Versorgungsspannung U1 unter einen Schwellwert einen Steuerstrom IS liefert. Bei einer weiteren Ausgestaltungsform ist zwischen dem gemeinsamen Kontaktpunkt der Widerstände R3, R7 und dem negativen Pol E1- der Versorgungsspannung U1 eine Diode zwischengeschaltet, die bei einer Falschpolung der Versorgungsspannung U1 den Transistor T schützt.

Vor dem Einschalten der Stromversorgungseinrichtung sind der Speicherkondensator C sowie die Kondensatoren C1, C2 nicht geladen. Die Halbleiterschalter F1, F2, F3 sind bei dem in der Figur dargestellten Ausführungsbeispiel als selbstsperrende n-Kanal-MOS-Feldeffekttransistoren ausgebildet und somit vor dem Einschalten gesperrt. Damit fließt der Laststrom beim Einschalten über den Parallelwiderstand R und wird so wirksam begrenzt. In dem Maße, indem der erste Kondensator C1 nach dem Einschalten durch die Konstantstromquelle 4 geladen wird, baut sich dadurch langsam die Steuerspannung an der Gate-Source-Strecke des Feldeffekttransistors F1 derart auf, daß dieser allmählich leitend wird und schließlich den Parallelwiderstand R völlig überbrückt. Somit wird durch das langsame Einschalten des ersten Feldeffekttransistors F1 (Softstart) eine wirksame Begrenzung des Laststromes beim Einschalten erreicht. Damit fließt der gesamte Laststrom während des Einschaltvorgangs zunächst über den Parallelwiderstand R und nach einer Einschaltverzögerungszeit, deren Größe durch den aus der Konstantstromquelle gelieferten Konstantstrom sowie den Wert des ersten Kondensators C1 bestimmt wird, direkt, d.h. verlustarm, über die Drain-Source-Strecke des ersten Feldeffekttransistors F1.

Bei dem in der Figur dargestellten Ausführungsbeispiel wird mit Hilfe der Schwellwertschaltung 3 die Versorgungsspannung U1 abgefühlt. Die Widerstände R7, R8 des zweiten Spannungsteilers sowie die Zenerdiode Z sind dabei so dimensioniert, daß der Transistor T oberhalb eines Schwellwertes der Versorgungsspannung U1 leitend ist. Der Transistor T ist leitend, wenn die zum Durchschalten des Transistors T benötigte Basis-Emitter-Spannung von ca. 0,6 Volt, die aus der Differenzspannung der am Widerstand R8 und an der Zenerdiode Z abfallenden Spannung (Referenzspannung) bestimmt ist, überschritten wird. Durch den dritten Widerstand R3 wird sichergestellt, daß bei gesperrtem Transistor T ein Stromfluß über die Zenerdiode Z und diesen erfolgt, so daß an der Zenerdiode Z die zum Durchschalten des Transistors T benötigte Referenzspannung abfällt. Bei einer praktisch ausgeführten Schaltungsanordnung beträgt der Wert der Versorgungsspannung U1 im Normalbetrieb 60 V und der Schwellwert 55 V. Arbeitet die Stromversorgungseinrichtung nach dem Einschalten im Normalbetrieb, d.h. es kommt zu keinen Aussetzern bzw. Einbrüchen der Versorgungsspannung U1, so ist der Transistor T bei einer Versorgungsspannung oberhalb des Schwellwertes leitend, d.h., es fließt ein Kollektorstrom in Form eines Steuerstroms IS. Der Steuerstrom bewirkt an dem Parallel zur Steuerstrecke des dritten Feldeffekttransistors F3 liegenden sechsten Widerstand R6 einen Spannungsabfall. Dadurch wird der Feldeffekttransistor F3 so angesteuert, daß dieser leitend ist. Damit wird die Steuerstrecke (Gate-Source) des zweiten Feldeffekttransistors F2 durch die Schaltstrecke (Drain-Soruce) des dritten Feldeffekttransistors F3 niederohmig überbrückt und der zweite Feldeffekttransistor F2 somit gesperrt. Über den fünften Widerstand R5 wird in diesem Betriebszustand (Normalbetrieb) weiterhin der zweite Kondensator C2 und aus der Konstantstromquelle 4 der erste Kondensator C1 geladen. Da der zweite Feldeffekttransistor F2 gesperrt ist, liegt am Verzögerungsglied R1, C1 zwischen Gate- und Source-Elektrode des ersten Feldeffekttransistors F1 eine Spannung, die so groß ist, daß dieser leitend ist. Der Parallelwiderstand R ist somit bei Normalbetrieb niederohmig durch die Drain-Source-Strecke des ersten Feldeffekttransistors F1 überbrückt.

Fällt die Versorgungsspannung U1 z.B. infolge von Netzspannungsaussetzern unter den durch die Anordnung 3 vorgegebenen Schwellwert (z.B. unter 55 V), so wird der Transistor T gesperrt, da die zum Durchschalten des Transistors T benötigte durch den Widerstand R8 und die Zenerdiode Z bestimmte Basis-Emitter-Spannung unterschritten wird. Damit entfällt die Ansteuerung des dritten Feldeffekttransistor F3, d.h., es fließt kein Steuerstrom IS mehr über den sechsten Widerstand R6. Damit wird die Steuerspannung zwischen Gate- und Source-Elektrode des dritten Feldeffekttransistors F3 zu Null und dieser somit gesperrt. Nachdem der dritte Feldeffekttransistor F3 gesperrt ist, wird der zweite Kondensator C2 über die Widerstände R9, R10 des ersten Spannungsteilers entladen. Dieser Entladevorgang führt zu einem Spannungsabfall an der Steuerstrecke des zweiten Feldeffekttransistors F2, so daß dieser leitend wird. Der zweite Feldeffekttransistor F2 bleibt leitend, solange der Spannungsabfall am Widerstand R10 über der zum Durchschalten des Transistors benötigten Steuerspannung liegt. Aufgrund des leitenden zweiten Feldeffekttransistors F2 wird der erste Kondensator C1 über die Drain-Source-Strecke des zweiten Feldeffekttransistors F2 entladen. Dies hat zur Folge, daß die Spannung zwischen Gate- und Source-Elektrode des ersten Feldeffekttransistors F1 sinkt und dieser schließlich gesperrt wird. Somit fließt zunächst im Normalbetrieb der gesamte Laststrom niederohmig über die Drain-Source-Strecke des leitenden ersten Feldeffekttransistors F1, solange der zweite Feldeffekttransistor F2 gesperrt ist. Bei Aussetzern oder Einbrüchen der Versorgungsspannung U1 wird der zweite Feldeffekttransistor F2 jedoch aufgrund des sich entladenden zweiten Kondensators C2 leitend, während im gleichen Maße der erste Feldeffekttransistor F1 gesperrt wird und somit der gesamte Laststrom schließlich über den Parallelwiderstand R begrenzt wird.

Nach dem Entladen des ersten Kondensators C1 ist der erste Feldeffekttransistor F1 wieder gesperrt und die Einschaltstrombegrenzungsschaltung befindet sich sofort wieder in neuer Bereitschaft. Damit fließt bei einem erneuten Einschaltvorgang der Laststrom wieder zunächst völlig über den Parallelwiderstand R und erst allmählich nach dem Ladevorgang des ersten Kondensators C1 direkt über die Drain-Source-Strecke des ersten Feldeffekttransistors F1. Damit ist die Einschaltstrombegrenzungsschaltung auch bei häufig und schnell auftretenden Versorgungsspannungsaussetzern verzögerungsfrei wieder wirksam.

Bei einer praktisch ausgeführten Schaltungsanordnung beträgt der Wert des ersten Kondensators C1 1µF und der aus der Konstantstromquelle 4 gelieferte Konstantstrom 0,5 - 1mA. Die Widerstände R9, R10 des ersten Spannungsteilers sind so dimensioniert, daß bei dem maximalen Wert der Versorgungsspannung U1 die Spannung am Widerstand R10 zum Schutz des Feldeffekttransistors F2 maximal 20 V erreicht.

Die in der Figur gezeigte Schaltungsanordnung arbeitet verlustarm, da eine sehr geringe Ansteuerenergie für den ersten Feldeffekttransistor F1 benötigt wird und dieser im Betrieb eine geringe Verlustleistung aufweist. Dies hat den Vorteil, daß der erste Feldeffekttransistor F1 keine zusätzliche Kühlung benötigt. Außerdem sind neben dem Parallelwiderstand R im Begrenzungsfall bzw. der Drain-Source-Strecke des ersten Feldeffekttransistors F1 im Normalbetrieb sowie der als Entladungsschutz für den Speicherkondensator C benötigten Diode D keine weiteren verlustbehafteten Bauelemente im Laststromkreis enthalten. Zur Erhöhung der über den ersten Feldeffekttransistor F1 übertragenen Leistung können diesem weitere Feldeffekttransistoren parallelgeschaltet werden.

## Patentansprüche

1. Stromversorgungseinrichtung mit einer zwischen einer eingangsseitigen Versorgungsspannung (U1) und einem ausgangsseitigen Speicherkondensator (C) liegenden Einschaltstrombegrenzungsschaltung mit einem ersten Halbleiterschalter (F1), dessen Schaltstrecke parallel zu einem Widerstand (R) und in Reihe mit dem Speicherkondensator (C) liegt, dessen dem Widerstand abgewandter Anschluß mit einem Pol (E+) der Versorgungsspannung (U1) gekoppelt ist, wobei parallel zu dessen Steuerstrecke ein erster Kondensator (C1) sowie die Schaltstrecke eines zweiten Halbleiterschalters (F2) angeordnet sind, dessen Steuerelektrode an den Abgriff eines ersten Spannungsteilers (R9, R10) angeschlossen ist, wobei parallel zur Steuerstrecke des zweiten Halbleiterschalters (F2) die Schaltstrecke eines dritten Halbleiterschalters (F3) liegt, der in Abhängigkeit eines von einer Schwellwertschaltung (3) gelieferten Steuerstroms (IS) beim Unterschreiten eines Schwellwertes der Versorgungsspannung (U1) gesperrt wird,
dadurch gekennzeichnet,
daß die Halbleiterschalter (F1, F2, F3) als selbstsperrende Feldeffekttransistoren ausgebildet sind und parallel zur Steuerstrecke des ersten Halbleiterschalters (F1) ein erster Widerstand (R1) angeordnet ist, der zusammen mit dem ersten Kondensator (C1) eine Parallelschaltung zum verzögerten Einschalten des ersten Halbleiterschalters (F1) bildet, wobei parallel zum ersten Spannungsteiler (R9, R10) ein zweiter Kondensator (C2) liegt, der beim Unterschreiten eines Schwellwertes der Versorgungsspannung (U1), nachdem der dritte Halbleiterschalter (F3) gesperrt ist, zur Entladung über die Widerstände des ersten Spannungsteilers (R9, R10) und damit zum Steuern des zweiten Halbleiterschalters (F2) in den leitenden Zustand vorgesehen ist.

2. Stromversorgungseinrichtung nach Anspruch 1,
dadurch gekennzeichnet,
daß der zweite Kondensator (C2) über einen an ein Bezugspotential (E+) der Versorgungsspannung (U1) angeschlossenen fünften Widerstand (R5) geladen wird.

3. Stromversorgungseinrichtung nach Anspruch 2,
dadurch gekennzeichnet,
daß der fünfte Widerstand (R5) zur Vermeidung eines Entladens des zweiten Kondensators (C2) über eine Diode mit dem Bezugspotential (E+) verbunden ist.

4. Stromversorgungseinrichtung nach einem der Ansprüche 1 bis 3,
dadurch gekennzeichnet,
daß die Schwellwertschaltung (3) einen Bipolartransistor (T) aufweist, dessen Basis an den Abgriff eines eingangsseitig angeordneten zweiten Spannungsteilers (R7, R8), dessen Kollektor über einen zweiten Widerstand (R2) an die Steuerelektrode des dritten Halbleiterschalters (F3) und dessen Emitter über eine Zenerdiode (Z) an ein gemeinsames Bezugspotential (E+) und über einen dritten Widerstand (R3) an einen ersten Pol (E1-) der auf das Bezugspotential (E+) bezogenen Versorgungsspannung (U1) angeschlossen ist.

5. Stromversorgungseinrichung nach einem der Anprüche 1 bis 4,
dadurch gekennzeichnet,
daß die Halbleiterschalter (F1, F2, F3) als selbstsperrende n-Kanal-MOS-Feldeffekttransistoren ausgebildet sind, deren Source-Elektroden mit einem Potential (E-) verbunden sind, das über eine Diode (D) an den ersten Pol (E1-) der Versorgungsspannung (U1) und über den Parallelwiderstand (R) an einen ersten Pol (E2-) einer am Speicherkondensator (C) anliegenden auf das Bezugspotential (E+) bezogenen Betriebsspannung (U2) angeschlossen ist.

6. Stromversorgungseinrichtung nach einem der Ansprüche 1 bis 5,
dadurch gekennzeichnet,
daß zum Laden des ersten Kondensators (C1) eine an das Bezugspotenial (E+) angeschlossene Konstantstromquelle (4) vorgesehen ist.

7. Stromversorgungseinrichtung nach Anspruch 6,
dadurch gekennzeichnet,
daß die Konstantstromquelle (4) einen vierten Feldeffekttransistor (F4) aufweist, dessen Drain-Elektrode an das Bezugspotential (E+) und dessen Gate-Elektrode an den ersten Kondensator (C1) und über einen vierten Widerstand (R4) an die Source-Elektrode angeschlossen ist.

8. Stromversorgungseinrichtung nach einem der Ansprüche 1 bis 7,
dadurch gekennzeichnet,
daß dem ersten Halbleiterschalter (F1) mindestens ein weiterer Halbleiterschalter parallelgeschaltet ist.

## Claims

1. A power supply unit which comprises an inrush current limiting circuit which is provided between a supply voltage (U1) at the input side and a storage capacitor (C) at the output side and which comprises a first semiconductor switch (F1) whose switching path is connected parallel to a resistor (R) and in series with the storage capacitor (C) whose terminal which is remote from the resistor is coupled to one pole (E+) of the supply voltage (U1), parallel to the control path thereof there being connected a first capacitor (C1) as well as the switching path of a second semiconductor switch (F2) whose control electrode is connected to the tap of a first voltage divider (R9, R10), parallel to the control path of the second semiconductor switch (F2) there being connected the switching path of a third semiconductor switch (F3) which is turned off, in dependence on a control current (IS) supplied by a threshold value circuit (3), when the supply voltage (U1) drops below a threshold value,
characterized in that
the semiconductor switches (F1, F2, F3) are constructed as normally-off field effect transistors and that parallel to the control path of the first semiconductor switch (F1) there is arranged a first resistor (R1) which forms, in conjunction with the first capacitor (C1), a parallel circuit for delayed turning on of the first semiconductor switch (F1), parallel to the first voltage divider (R9, R10) there being provided a second capacitor (C2) which is intended to be discharged, when the supply voltage (U1) drops below a threshold value after the third semiconductor switch (F3) has been turned off, via the resistors of the first voltage divider (R9, R10), and hence to control the second semiconductor switch (F2) to the turned on state.

2. A power supply unit as claimed in Claim 1,
characterized in that
the second capacitor (C2) is charged via a fifth resistor (R5) which is connected to a reference potential (E+) of the supply voltage (U1).

3. A power supply unit as claimed in Claim 2,
characterized in that
the fifth resistor (R5) is connected to the reference potential (E+) via a diode in order to avoid discharging of the second capacitor (C2).

4. A power supply unit as claimed in any one of the Claims 1 to 3,
characterized in that
the threshold value circuit (3) comprises a bipolar transistor (T) whose base is connected to the tap of a second voltage divider (R7, R8) which is arranged at the input side, whose collector is connected to the control electrode of the third semiconductor switch (F3) via a second resistor (R2), and whose emitter is connected to a common reference potential (E+) via a zener diode (Z) and via a third resistor (R3) to a first pole (E1-) of the supply voltage (U1) related to the reference potential (E+).

5. A power supply unit as claimed in any one of the Claims 1 or 4,
characterized in that
the semiconductor switches (F1, F2, F3) are constructed as normally-off n-channel MOS field effect transistors whose source electrodes are connected to a potential (E-) which is connected to the first pole (E1-) of the supply voltage (U1) via a diode (2) and, via the parallel resistor (R), to a first pole (E2-) of an operating voltage (U2), present across the storage capacitor (C2) and related to the reference potential (E+).

6. A power supply unit as claimed in any one of the Claims 1 to 5,
characterized in that
for the charging of the first capacitor (C1) there is provided a constant-current source (4) which is connected to the reference potential (E+).

7. A power supply unit as claimed in Claim 6,
characterized in that
the constant-current source (4) comprises a fourth field effect transistor (F4) whose drain electrode is connected to the reference potential (E+) and whose gate electrode is connected to the first capacitor (C1) and, via a fourth resistor (R4), to the source electrode.

8. A power supply unit as claimed in any one of the Claims 1 to 7,
characterized in that
at least one further semiconductor switch is connected parallel to the first semiconductor switch (F1).

## Revendications

1. Dispositif d'alimentation comportant, entre une tension d'alimentation (U1) disponible du côté d'entrée et un condensateur accumulateur (C) situé du côté de sortie, un circuit limiteur de courant de fermeture pourvu d'un premier commutateur semiconducteur (F1) dont le trajet de commutation est disposé en parallèle avec une résistance (R) et en série avec le condensateur accumulateur (C), dont la borne située à l'opposé de la résistance est couplée à une borne (E+) de la tension d'alimentation (U1), un premier condensateur (C1) ainsi que le trajet de commutation d'un deuxième commutateur semiconducteur (F2) étant disposés en parallèle avec le trajet de commande dudit premier commutateur semiconducteur, deuxième commutateur semiconducteur (F2) dont l'électrode de commande est raccordée à la prise d'un premier diviseur de tension (R9, R10) et en parallèle avec le trajet de commande duquel est disposé le trajet de commutation d'un troisième commutateur semiconducteur (F3) qui, en fonction d'un courant de commande (IS) fourni par un circuit à valeur de seuil (3), est bloqué lorsqu'une valeur de seuil de la tension d'alimentation (U1) n'est pas atteinte, caractérisé en ce que les commutateurs semiconducteurs (F1, F2, F3) sont réalisés sous la forme de transistors à effet de champ à autoblocage et en ce qu'en parallèle avec le trajet de commande du premier commutateur semiconducteur (F1), est disposée une première résistance (R1) qui, avec le premier condensateur (C1), forme un montage parallèle pour la mise en conduction retardée du premier commutateur semiconducteur (F1), tandis que, en parallèle avec le premier diviseur de tension (R1, R10) est disposé un deuxième condensateur (C2) qui, lorsqu'une valeur de seuil de la tension d'alimentation (U1) n'est pas atteinte, après le blocage du troisième commutateur semiconducteur (F3), est prévue pour la décharge du premier diviseur de tension (R9, R10) à travers les résistances et donc pour la mise en état de conduction du deuxième commutateur semiconducteur (F2).

2. Dispositif d'alimentation selon la revendication 1, caractérisé en ce que le deuxième condensateur (C2) est chargé à travers une cinquième résistance (R5) raccordée à un potentiel de référence (E+) de la tension d'alimentation (U1).

3. Dispositif d'alimentation selon la revendication 2, caractérisé en ce que, pour éviter une décharge du deuxième condensateur (C2), la cinquième résistance (R5) est reliée à travers une diode au potentiel de référence (E+).

4. Dispositif d'alimentation selon l'une quelconque des revendications 1 à 3, caractérisé en ce que le circuit à valeur de seuil (3) présente un transistor bipolaire (T) ayant sa base reliée à la prise d'un deuxième diviseur de tension (R7, R8) disposé du côté de l'entrée, son collecteur relié à travers une deuxième résistance (R2) à l'électrode de commande du troisième commutateur semiconducteur (F3) et son émetteur relié à travers une diode Zener (Z) à un potentiel de référence commun (E+) et, à travers une troisième résistance (R3) à une première borne (E1-) de la tension d'alimentation (U1) référée au potentiel de référence (E+).

5. Dispositif d'alimentation selon l'une quelconque des revendications 1 à 4, caractérisé en ce que les commutateurs semiconducteurs (F1, F2, F3) sont réalisés sous la forme de transistors à effet de champ MOS à canal n à autoblocage, dont les électrodes de source sont reliées à un potentiel (E-) qui est raccordé à travers une diode (D) à la première borne (E1-) de la tension d'alimentation (U1) et, à travers la résistance parallèle (R) à une première borne (E2-) d'une tension de fonctionnement (U2) présente aux bornes du condensateur accumulateur (C) et référée au potentiel de référence (E+).

6. Dispositif d'alimentation selon l'une des revendications 1 à 5, caractérisé en ce que, pour charger le premier condensateur (C1), il est prévu une source de courant constant (4) raccordée au potentiel de référence (E+).

7. Dispositif d'alimentation selon la revendication 6, caractérisé en ce que la source de courant constant (4) comporte un quatrième transistor à effet de champ (F4) dont l'électrode de drain est raccordée au potentiel de référence (E+) et dont l'électrode de grille est raccordée au premier condensateur (C1) et, à travers une quatrième résistance (R4), à l'électrode de source.

8. Dispositif d'alimentation selon l'une des revendications 1 à 7, caractérisé en ce qu'en parallèle avec le premier commutateur semiconducteur (F1) est connecté au moins un autre commutateur semiconducteur.
